# EUROPÄISCHE PATENTSCHRIFT

(11) **EP 2 155 490 B1**
(45) Veröffentlichungstag und Bekanntmachung des Hinweises auf die Patenterteilung: **09.04.2014**
(21) Anmeldenummer: 08760857.6
(22) Anmeldetag: 11.06.2008
(51) Int. Cl.: B32B 37/22, B32B 38/18, B27N 7/00

(54) **VERFAHREN UND VORRICHTUNG ZUR DEKORATIVEN BESCHICHTUNG EINER PLATTE**
METHOD AND DEVICE FOR DECORATIVELY COATING A BOARD
PROCÉDÉ ET DISPOSITIF DE REVÊTEMENT DÉCORATIF D'UN PANNEAU

(30) Priorität: 20.06.2007 DE 102007028822
(43) Veröffentlichungstag der Anmeldung: 24.02.2010
(73) Patentinhaber: Surface Technologies GmbH & Co. KG, 15837 Baruth (DE)
(72) Erfinder: PANKOKE, Rene, 33613 Bielefeld (DE)
(74) Vertreter: Michalski Hüttermann & Partner Patentanwälte
(86) Internationale Anmeldenummer: PCT/EP2008/057306
(87) Internationale Veröffentlichungsnummer: WO 2008/155276

(56) Entgegenhaltungen:
- EP-A- 0 065 940
- DE-A1- 4 221 611
- DE-A1- 10 316 695
- DE-A1- 10 360 187
- DE-A1- 19 963 084
- DE-A1-102004 014 819
- DE-A1-102005 020 456
- US-A- 4 773 959
- US-B1- 6 416 607

## Beschreibung

Aus der Holzwerkstoffbranche sind verschiedene Verfahren zur dekorativen Beschichtung von plattenförmigen Werkstoffen, z.B. Spanplatten, MDF-Platten oder HDF-Platten bekannt. Diese beschichteten Platten werden dann entweder als Basiswerkstoff für die Möbelherstellung, insbesondere Kastenmöbelherstellung, genutzt, oder z.B. als sogenannter Laminatfußboden in der Fußbodenindustrie verarbeitet.

Die DE 199 63 084 A1 offenbart ein Zierlaminat, das eine Platte als Basismaterial aufweist, die über eine Schicht aus härtbaren Harz mit einer Dekorpapierschicht verbunden ist. Auf der Dekorpapierschicht ist eine transparente Overlay-Schicht mit härtbaren Harz angeordnet. Bei der Herstellung des Zierlaminats wird eine Presse eingesetzt, die bei 150°C ungefähr 45 min Druck auf die Schichten ausübt. Dabei wird der Durchmesser der aufgedruckten Tintentröpfchen im Durchmesser bis zum sechsfachen vergrößert. Dieses Verfahren ist daher nur begrenzt für große Losgrößen einsetzbar.

Bei den heute bekannten Verfahren wird ein sogenanntes Dekorpapier mit einem dekorativen Muster, z.B. einer Nachbildung einer Holzmaserung oder auch einem Fliesenmuster für die Anwendung im Fußbodenbereich, bedruckt. Anschließend wird das so bedruckte Dekorpapier mit einem Harz, vorzugsweise einem Melamin-harz, imprägniert und angetrocknet. In einem anschließenden Schritt wird das bedruckte und imprägnierte Papier auf eine Holzwerkstoffplatte verpresst. Bei diesem Pressvorgang kann z.B. eine sogenannte Kurztaktpresse oder auch eine kontinuierliche Doppelbandpresse zum Einsatz kommen, die aus den Anmeldungen DE 37 19 976 und EP 07 110 063.0 bzw. DE 20 2006 009 638.8 bekannt sind. Bei der Verpressung des imprägnierten Dekorpapiers auf der Platte reagiert das entsprechende Harz, vorzugsweise Melaminharz, aus. Man sagt auch, es kondensiert aus, so dass eine sehr widerstandfähige Oberfläche entsteht, die sich während des Pressvorgangs sehr fest mit der darunterliegenden Holzwerkstoffplatte verbindet. Im Falle von Laminatfußboden wird üblicherweise auf das imprägnierte Dekorpapier noch eine weitere Papierschicht aus einem dünnen, weißen, sogenannten Overlaypapier gelegt, welches mit Korundpartikeln (Aluminiumoxid Al 0₂) durchsetzt ist, um die Kratzfestigkeit der Oberfläche zu erhöhen wegen der starken Beanspruchung durch Abrieb von Schuhen. Dafür ist die Rückseite üblicherweise nicht mit einem dekorativ bedruckten, sondern mit einem unbedruckten einfarbigen Papier versehen, welches z.B. mit einem günstigeren Phenolharz imprägniert ist und in der Presse ebenso aushärtet.

Im Anwendungsbereich für Möbeloberftächen sollen Üblicherweise sowohl die Vorderals auch die Rückseite dekorativ beschichtet werden, so dass hier meistens oben und unten ein dekorativ bedrucktes Dekorpapier, vorzugsweise mit Melamin-harz imprägniert, zum Einsatz kommt.

Die Schwierigkeit in diesem Verfahren besteht darin, dass die Dekordrucker aufgrund ihrer großen Maschinen und schnellen und hohen Produktionsgeschwindigkeiten sowie ihrer langen Rüstzeiten möglichst große Mengen an einem konstanten Dekor drucken wollen, die Hersteller der dekorativ beschichteten Platten aber letztendlich eine möglichst flexible und kleine Losgröße von verschiedenen Dekoren herstellen möchten. Außerdem ist das oben genannte Verfahren kostenintensiv, da mit dem Drucken, dem Imprägnieren und dem Pressen nach der Herstellung des Papiers weitere drei Verfahrensschritte zur Herstellung des Endproduktes gemacht werden müssen.

Um diese oben dargestellten Schwierigkeiten zu beheben gibt es bereits Ansätze des sogenannten Direktdruckes auf Holzwerkstoffplatten. Hier wird mittels Rotationstiefdruck über eine Gummiwalze indirekt auf die Holzwerkstoffplatte ein dekoratives Muster aufgetragen, welches anschließend entweder mit UV-Lacken weiterbearbeitet wird (vgl. DE 20 2004 018 710 Ul) oder auch mit einem Auftrag von Flüssigharz und einer anschließenden Verpressung in einer Kurztaktpresse oder einer kontinuierlichen Presse DE 103 60 187.2 und DE 10 2004 014 819 Al) weiterverarbeitet wird.

DE 4221611 A1 offenbart eine Vorrichtung zum formatgerechten Fixieren von Papierbahnabschnitten an der Oberseite und/oder an der Unterseite von Holzwerkstoffplatten unterschiedlichen Formats. Zum grundsätzlichen Aufbau gehören ein horizontaler Holzwerkstoffplatten-Transportgang, ein oberer Papier-Transportgang, ein unterer Papier-Transportgang, eine obere Papiercoilstation, eine untere Papiercoilstation und ein Abführ-Transportgang.

Die Papier-Transportgänge sind schräg abwärtsfördernd bzw. schräg aufwärtsfördernd zu dem Holzwerkstoffplatten-Transporgang geführt. Die obere Papiercoilstation sowie die untere Papiercoilstation sind zur Aufnahme von jeweils zumindest zwei Papiercoils eingerichtet. Die Papierbahnen der Papiercoils sind in der oberen Papiercoilstation bzw. in der unteren Papiercoilstation nacheinander oder gemeinsam durch die gleiche Formattrennvorrichtung führbar und bei gemeinsamer Führung von zwei Papierbahnen durch dort angeordnete elektrische Sprühelektroden elektrostatisch aneinander fixierbar. Die Papier-Transportgänge sind Saugband-Transportgänge. Am Ort des Anlegens der Papierbahnabschnitte an die Holzwerkstoffplatten befinden sich weitere elektrische Sprühelektroden, mit denen die Papierbahnabschnitte an den Holzwerkstoffplatten unterseitig und/oder oberseitig elektrostatisch fixierbar sind.

Dennoch haben alle oben genannten Verfahren weiterhin den Nachteil der relativ geringen Flexibilität und hohen Rüstzeiten bei Wechsel von Dekoren.

Die vorliegende Erfindung löst dieses Problem, mit einem Verfahren mit den Merkmalen des Anspruches 1 und mit einer Vorrichtung mit den Merkmalen des Anspruches 5

Erfindungsgemäß erfolgt die Zufuhr eines Dekorpapiers zu einer Digitaldruckmaschine und Bedrucken des Dekorpapiers im Rahmen des kontinuierlichen Beschichtungvorganges, also parallel zu dem Transport der zu beschichtenden Platten. Dabei kommt also weiterhin bedrucktes Dekorpapier zur Anwendung, wobei allerdings das Dekorpapier in einem Verfahrensschritt direkt und abgestimmt auf die Produktionsgeschwindigkeit der Presse, sei es eine Taktpresse oder eine kontinuierliche Presse, bedruckt wird. Auf diese Art und Weise muss keine große Menge an Dekorpapier hergestellt und auf Rollen zur weiteren Verarbeitung aufgewickelt werden, sondern es kann immer genau die Menge im laufenden Prozess hergestellt werden, die auch direkt danach in der Presse verarbeitet wird.

In einer besonderen Ausführungsforrn der Erfindung ist die Druckmaschine als eine Digitaldruckmaschine mit Tintenstrahltechnologie ausgebildet. Hier wird über einen Tintenstrahlkopf, von dem mehrere Einheiten parallel nebeneinander angeordnet sind und je nach Anzahl der verschiedenen Farben beim Druck auch mehrere hintereinander angeordnet sind, im Durchlauf auf das Papier das gewünschte Dekor aufgedruckt. Es können dabei die identischen Farbpigmente verwendet werden, welche auch in der bekannten Rotationstiefdrucktechnologic zum Drucken auf Dekorpapier im Einsatz sind.

Mit dieser Ausbildungsform ist es möglich, nach jeder beliebigen Anzahl von verpressten Platten ohne Unterbrechung der Fertigung ein neues Dekor auf die nächste Platte zu bringen, so dass Losgrößen bis herunter auf Losgröße 1 ohne Unterbrechung der Produktion möglich sind.

Die Erfindung wird nachfolgend anhand mehrerer Ausführungsbeispiele mit Bezug auf die beigefügten Zeichnungen erläutert. Es zeigen:
- Figur 1: eine schematische Darstellung einer Vorrichtung zum dekorativen Beschichten einer Platte;
- Figur 2: eine Darstellung der mit der Vorrichtung beschichteten Platte;
- Figur 3: eine schematische Darstellung eines zweiten Ausführungsbeispieles einer erfindungsgemäßen Vorrichtung zur Beschichtung einer Platte,
- Figur 4: eine schematische Ansicht eines dritten Ausführungsbeispieles einer erfindungsgemäßen Vorrichtung zur Beschichtung einer Platte.

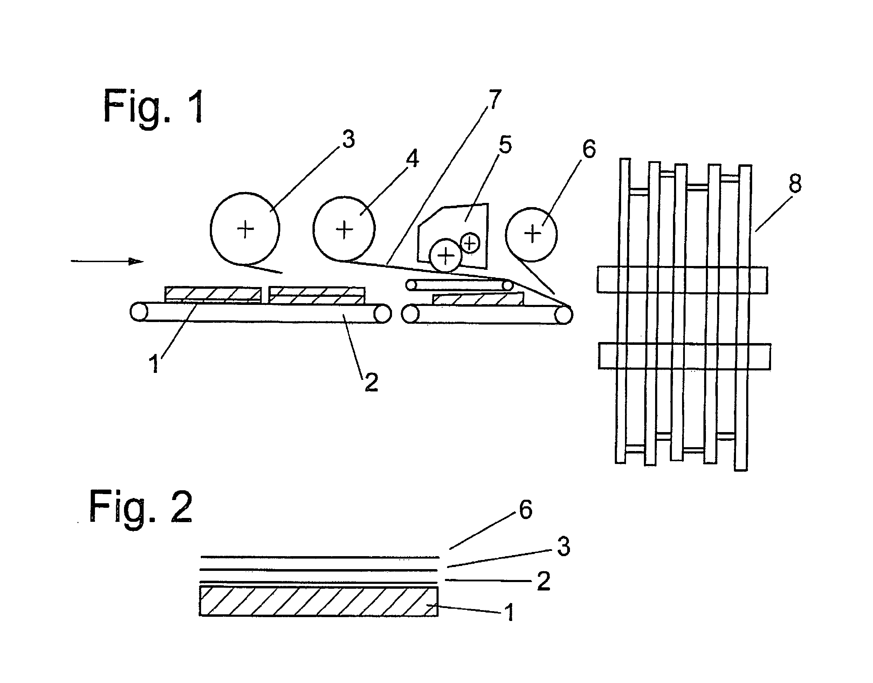

In Figur 1 werden hintereinander Platten 1, vorzugsweise Holzwerkstoffplatten, wie MDF-Platten, Spanplatten oder HDF-Platten, über eine Transporteinrichtung 2 einer Beschichtungsstation zugeführt. Oberhalb der Platten wird von einer Rolle 3 Underlay-Papier abgewickelt, das beispielsweise als beharztes Papier oder als Flüssigharz eine Untergrundbeschichtung auf den Platten 1 bildet.

Für die dekorative Beschichtung der Platte ist ein einfarbiges Dekorpapier 4 vorgesehen, das trocken von einer Rolle abgewickelt wird, wobei es auch gegebenenfalls imprägniert oder vorbeharzt sein kann. Das Dekorpapier 4 kann vorzugsweise weiss, grau beige oder in einem andern einfarbigen leicht zu bedruckenden Farbton gehalten sein. Das abgewickelte Papier 4 wird in einer Bahn 7 einer Druckmaschine 5 zugeführt. Die Druckmaschine 5 ist als digitale Druckmaschine ausgebildet und kann Papierbahnen mit einer Geschwindigkeit von etwa 1 m/s bedrucken. Im Bereich der Druckmaschine 5 ist die Bahn 7 aus Dekorpapier beabstandet von der Platte 1 angeordnet, das heißt die Förderung der Bahn 7 aus Dekorpapier ist unabhängig von der Förderung der Platten 1.

Nach der Druckmaschine 5 wird das Dekorpapier auf eine Platte 1 aufgetragen und vorher gegebenenfalls auf die erforderliche Länge geschnitten. Es ist auch möglich, das Dekorpapier 7 bahnenförmig aufzutragen. Ferner wird ein beharztes Papier von einer Rolle 6 abgewickelt und entweder auf das Dekorpapier 7 oder auf die bereits mit dem Dekorpapier beschichtete Platte 1 oben aufgelegt. Das beharzte Papier weist eine hohe Abriebsfestigkeit auf und wird meist mit Korund beschichtet, um eine Beschädigung der Oberfläche zu vermeiden.

Die Einheit aus Platte 1 und Dekorpapier 3, gegebenenfalls mit dem Underlay-Papier 2 sowie dem Overlay-Papier 6 wird einer Presse 8 zugeführt, die als Kurztaktpresse oder als Doppelbandpresse ausgebildet ist. Wenn eine Doppelbandpresse zum Einsatz kommt, kann der Schneidvorgang der Bahn aus Dekorpapier 7 auch noch nach dem Verpressen erfolgen. Bei einer Kurztaktpresse muss das Dekorpapier 7 vorher geschnitten werden.

In der Presse 8 wird die beschichtete Platte 1 verpresst und gegebenenfalls verprägt, wobei die Oberfläche 6 mit einer dreidimensionalen Struktur versehen werden kann, beispielsweise um Holzporen, Fliesenstreifen oder andere Formen auf der Oberfläche nachzubilden.

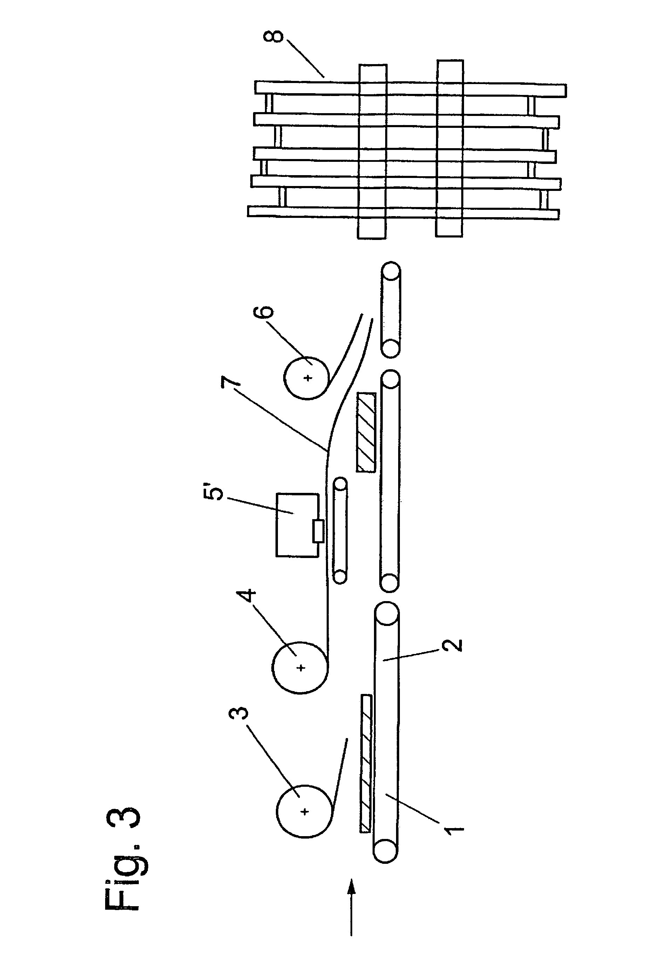

In Figur 3 ist eine alternative Ausführungsform einer erfindungsgemäßen Vorrichtung zur Beschichtung einer Platte dargestellt, wobei wesentlicher Unterschied die Ausbildung der Druckmaschine 5' als Digitaldruckmaschine ist. Der Druckkopf erstreckt sich dabei über die gesamte Breite der Bahn 7 aus einfarbigem Dekorpapier.

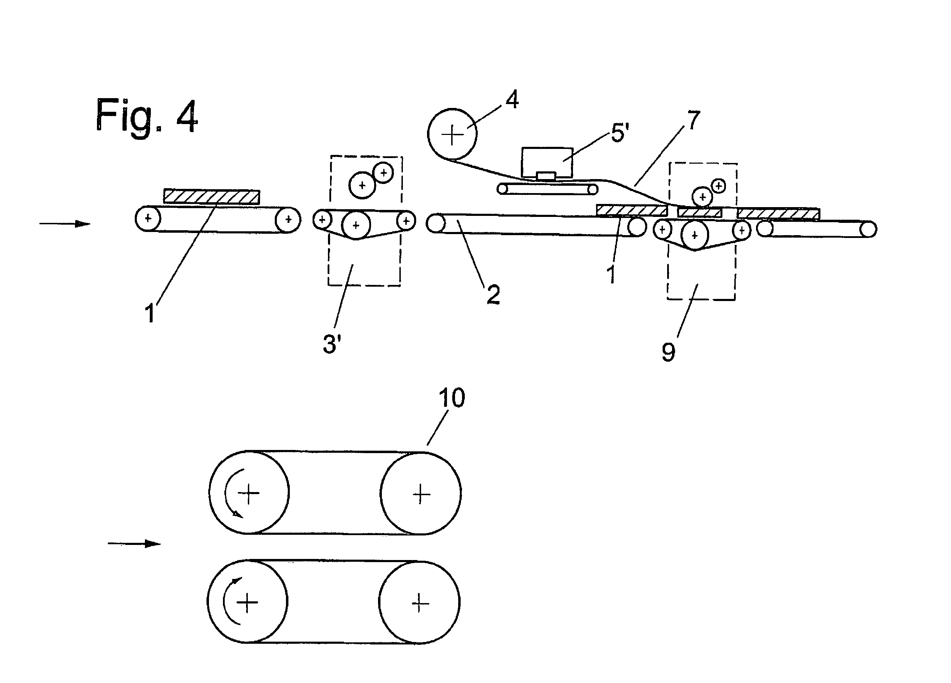

In Figur 4 ist eine weitere Ausführungsform einer erfindungsgemäßen Vorrichtung zur Beschichtung einer Platte dargestellt. Statt der Station 3 zum Auftragen eines Underlay-Papiers ist bei dieser Ausführungsform eine Beschichtungsstation 3' vorgesehen, die die Platte 1 aus Holzwerkstoff mit einem Flüssigharz beschichtet. Die mit dem Flüssigharz beschichtete Platte 1 wird dann über Transporteinrichtungen 2 zu einer weiteren Beschichtungsstation geführt, wo die Bahn 7 aus bedrucktem Dekorpapier aufgetragen wird. Das Dekorpapier 7 ist wie bei dem zweiten Ausführungsbeispiel durch eine Digitaldruckmaschine 5' mit dem gewünschten Dekormuster bedruckt worden. Das bedruckte Dekorpapier 7 wird dann auf die Platte 1 aufgetragen und anschließend ist eine Station 9 zum Auftragen einer Overlay-Beschichtung vorgesehen, die ein Flüssigharz auf das Dekorpapier 7 aufträgt. Dieses Flüssigharz kann mit Partikeln zur Erhöhung der Abriebfestigkeit versehen werden. Anschließend wird die Einheit aus Platte 1, Dekorpapier 7 sowie den Flüssigharzschichten zu einer Doppelbandpresse 10 zugeführt. In der Doppelbandpresse wird dann die Beschichtung der Platte 1 verpresst und gegebenenfalls verprägt, damit die Oberfläche der Platte eine dreidimensionale Struktur erhält. Nach der Doppelbandpresse 10 kann dann das Dekorpapier 7 zusammen mit den Platten 1 auf die gewünschte Länge geschnitten werden.

Durch den Einsatz einer Druckmaschine 5 bzw. 5' für das einfarbige Dekorpapier können mit der erfindungsgemäßen Vorrichtung auch kleine Losgrößen einfach hergestellt werden. Denn das Dekorpapier 7 kann individuell bedruckt werden, wobei zusätzlich der Vorteil für die Steuerung besteht, dass während des Druckvorganges die Information vorhanden ist, an welcher Stelle sich das Dekorbild in der Druckmaschine 5 bzw. 5' befindet. Insofern kann auf einfache Weise eine Steuerung erfolgen, so dass ein bestimmter Abschnitt des Dekorbildes mit der Vorderkante einer Platte 1 zusammentrifft. Es müssen keine Markierungen oder andere Elemente erfasst werden, um eine Ausrichtung des Dekorpapiers 7 auf die Platte 1 vornehmen zu können. Vielmehr kann die Druckmaschine 5 bzw. 5' die Lageinformation an die Steuerung der Station zum Beschichten des Dekorpapiers liefern.

In den gezeigten Ausführungsbeispielen wird das Dekorpapier benachbart zu den Platten bedruckt, aber in derselben Anlage, damit eine kontinuierliche Beschichtung durchgeführt werden kann. Es ist natürlich auch möglich, zunächst das Dekorpapier auf die Platte, ggfs mit der Underlay-Beschichtung aufzulegen und dort das Bedrucken des Dekorpapieres vorzunehmen. Nach dem Druckvorgang erfolgt dann der Auftrag des Overlay, um dann ein Verpressen, Prägen und Aushärten vorzunehmen.

## Patentansprüche

1. Verfahren zur dekorativen Beschichtung einer Platte (1), insbesondere einer Holzwerkstoffplatte, mit den folgenden Schritten:
- Transport einer Platte (1) zu einer Beschichtungsstation;
- Auftrag einer harzhaltigen Beschichtung auf die Platte (1);
- Auflegen eines bedruckten Dekorpapiers (7) auf die Platte (1), wobei eine Steuerung erfolgt, damit ein bestimmter Abschnitt des Dekorbildes mit der Vorderkante der Platte (1) zusammentrifft;
- Beschichten des Dekorpapiers mit einer harzhaltigen Beschichtung, und
- Verpressen, Verprägen und Aushärten der Einheit aus Platte, Dekorpapier und harzhaltiger Beschichtung mit einer dreidimensionalen Struktur in einer Presse, **dadurch gekennzeichnet, dass** das Verfahren vor dem Schritt des Auflegens des Dekorpapiers (7) auf die Platte (1) den Schritt
- Zufuhr eines Dekorpapiers zu einer digitalen Druckmaschine (5) und Bedrucken des Dekorpapiers (7) aufweist, so dass ein digital bedrucktes Dekorpapier (7) auf die Platte (1) aufgelegt wird.

2. Verfahren nach Anspruch 1, **dadurch gekennzeichnet, dass** die Beschichtung der Platte (1) und/oder des Dekorpapiers (7) über eine harzgetränkte Materialbahn erfolgt.

3. Verfahren nach Anspruch 1 oder 2, **dadurch gekennzeichnet, dass** auf die Platte und/oder das Dekorpapier Flüssigharz aufgetragen wird.

4. Verfahren nach einem der Ansprüche 1 bis 3, **dadurch gekennzeichnet, dass** auf die Platte (1) zunächst das Dekorpapier (7) aufgelegt wird, dort das Bedrucken des Dekorpapieres (7) vorgenommen wird und nach dem Druckvorgang dann ein Verpressen, Verprägen und Aushärten vorgenommen wird.

5. Vorrichtung zur dekorativen Beschichtung einer Platte, insbesondere zur Beschichtung einer Holzwerkstoffplatte, mit einer Transporteinrichtung für die zu beschichtenden Platten (1), einer Zuführeinrichtung für Dekorpapier zum Zufuhren des Dekorpapieres auf die Platten, einer Presse (10) zum Verpressen der beschichteten Platte und Mittel zum Prägen der Einheit aus Platte, Dekorpapier und harzhaltiger Beschichtung mit einer dreidimensionalen Struktur , **dadurch gekennzeichnet, dass** eine Steuerung vorhanden ist, mittels der eine Ausrichtung des Dekorpapieres auf die Platte (1) vornehmbar ist und eine Digitaldruckmaschine (5,5') zum Bedrucken des Dekorpapiers vorgesehen ist.

6. Vorrichtung nach Anspruch 5, **dadurch gekennzeichnet, dass** die Digitaldruckmaschine hinter einer Abwickelstation für das Dekorpapier und vor der Zuführeinrichtung zum Beschichten des Dekorpapiers mit einer harzhaltigen Bahn oder Flüssigharz vorgesehen ist.

7. Vorrichtung nach Anspruch 5 oder 6, **dadurch gekennzeichnet, dass** vor der Station zum Auflegen des Dekorpapiers auf die Platte eine Station zum Auftragen einer Untergrundbeschichtung, vorzugsweise Underlay-Papier oder Flüssigharz vorgesehen ist.

8. Vorrichtung nach einem der Ansprüche 5 bis 7, **dadurch gekennzeichnet, dass** die Presse als kontinuierliche Doppelbandpresse ausgebildet ist.

9. Vorrichtung nach einem der Ansprüche 5 bis 8, **dadurch gekennzeichnet, dass** die Presse als Kurztaktpresse ausgebildet ist.

## Claims

1. Method for decoratively coating a board (1), in particular a wood-base board, having the following steps:
- conveying a board (1) to a coating station;
- applying a resin-containing coating to the board (1);
- placing a printed decorative paper (7) onto the board (1), wherein control takes place in order for a specific portion of the decorative image to coincide with the leading edge of the board (1);
- coating of the decorative paper with a resin-containing coating, and
- pressing, embossing and curing the unit, consisting of board, decorative paper and resin-containing coating, with a three-dimensional structure in a press,
**characterized in that** the method, prior to the step of placing the decorative paper (7) onto the board (1), has the step of
- feeding a decorative paper to a digital printing machine (5) and printing the decorative paper (7), such that a digitally printed decorative paper (7) is placed onto the board (1).

2. Method according to Claim 1, **characterized in that** the coating of the board (1) and/or of the decorative paper (7) takes place via a resin-impregnated material web.

3. Method according to either Claim 1 or 2, **characterized in that** liquid resin is applied to the board and/or the decorative paper.

4. Method according to one of Claims 1 to 3, **characterized in that**, initially, the decorative paper (7) is placed onto the board (1), printing of the decorative paper (7) is performed there, and pressing, embossing and curing are performed after the printing operation.

5. Device for decoratively coating a board, in particular for coating a wood-base board, having a conveying unit for the boards (1) to be coated, a feeding device for decorative paper for feeding the decorative paper onto the boards, a press (10) for pressing the coated board, and means for embossing the unit consisting of board, decorative paper and resin-containing coating with a three-dimensional structure, **characterized in that** control, by means of which an alignment of the decorative paper with the board (1) can be performed, is available, and a digital printing machine (5, 5') for printing the decorative paper is provided.

6. Device according to Claim 5, **characterized in that** the digital printing machine is provided downstream of an unwinding station for the decorative paper, and upstream of the feeding unit for coating the decorative paper with a resin-containing web or liquid resin.

7. Device according to either Claim 5 or 6, **characterized in that** a station for applying an undercoating, preferably underlay paper or liquid resin, is provided upstream of the station for placing the decorative paper onto the board.

8. Device according to one of Claims 5 to 7, **characterized in that** the press is configured as a continuous double-belt press.

9. Device according to one of Claims 5 to 8, **characterized in that** the press is configured as a short-cycle press.

## Revendications

1. Procédé de revêtement décoratif d'une plaque (1), en particulier d'une plaque en matériau à base de bois, le procédé comportant les étapes suivantes :
transport d'une plaque (1) vers un poste de revêtement,
application d'un revêtement résineux sur la plaque (1),
pose d'un papier décoratif imprimé (7) sur la plaque (1), avec contrôle permettant à une partie définie de l'image décorative de coïncider avec le bord avant de la plaque (1),
revêtement du papier décoratif par un revêtement résineux et
compression, gaufrage et durcissement de l'unité constituée de la plaque, du papier décoratif et du revêtement résineux dans une presse pour lui donner une structure tridimensionnelle,
**caractérisé en ce que**
avant l'étape d'application du papier décoratif (7) sur la plaque (1), le procédé présente l'étape qui consiste à
amener un papier décoratif vers une machine numérique d'impression (5) et imprimer le papier décoratif (7) de manière à placer sur la plaque (1) un papier décoratif (7) imprimé numériquement.

2. Procédé selon la revendication 1, **caractérisé en ce que** le revêtement de la plaque (1) et/ou du papier décoratif (7) s'effectue par l'intermédiaire d'une nappe de matière imprimée de résine.

3. Procédé selon les revendications 1 ou 2, **caractérisé en ce qu'**une résine liquide est appliquée sur la plaque et/ou sur le papier décoratif.

4. Procédé selon l'une des revendications 1 à 3, **caractérisé en ce que** le papier décoratif (7) est d'abord appliqué sur la plaque (1), l'impression du papier décoratif (7) étant entreprise alors et la compression, le gaufrage et le durcissement étant réalisés après l'opération d'impression.

5. Dispositif de revêtement décoratif d'une plaque, en particulier de revêtement d'une plaque en matériau à base de bois, le dispositif présentant un système de transport des plaques (1) à revêtir, un système d'amenée de papier décoratif qui amène le papier décoratif sur les plaques et une presse (10) qui comprime les plaques revêtues ainsi que des moyens de gaufrage de l'unité constituée de la plaque, du papier décoratif et du revêtement résineux en lui donnant une structure tridimensionnelle,
**caractérisé en ce que**
le dispositif présente une commande qui permet d'aligner le papier décoratif sur la plaque (1) et une machine (5, 5') d'impression numérique qui imprime le papier décoratif.

6. Dispositif selon la revendication 5, **caractérisé en ce que** la machine d'impression numérique est prévue en aval d'un poste de déroulement du papier décoratif et en amont du système d'amenée qui revêt le papier décoratif d'une nappe contenant de la résine ou d'une résine liquide.

7. Dispositif selon les revendications 5 ou 6, **caractérise en ce qu'**un poste d'application d'un revêtement de fond, de préférence d'un papier de sous-couche ou de résine liquide, est prévu en amont du poste de pose du papier décoratif sur la plaque.

8. Dispositif selon l'une des revendications 5 à 7, **caractérisé en ce que** la presse est configurée comme presse continue à double bande.

9. Dispositif selon l'une des revendications 5 à 8, **caractérisé en ce que** la presse est configurée comme presse à haute cadence.
